# EUROPEAN PATENT SPECIFICATION

(11) **EP 3 795 868 B1**
(45) Date of publication and mention of the grant of the patent: **21.08.2024**
(21) Application number: 19804382.0
(22) Date of filing: 16.05.2019
(51) Int. Cl.: F16J 15/18, F16J 15/324, F16J 15/3272, F16J 15/44, F16J 15/34

(54) **SEAL RING**
DICHTUNGSRING
BAGUE D'ÉTANCHÉITÉ

(30) Priority: 17.05.2018 JP 2018095700
(43) Date of publication of application: 24.03.2021
(73) Proprietor: Eagle Industry Co., Ltd., Minato-ku Tokyo 105-8587 (JP)
(72) Inventor: KIMURA Wataru, Tokyo 105-8587 (JP); TOKUNAGA Yuichiro, Tokyo 105-8587 (JP); TAKIGAHIRA Yoshiaki, Tokyo 105-8587 (JP); KONO Toru, Tokyo 105-8587 (JP); KASAHARA Hidetoshi, Tokyo 105-8587 (JP); HIROMATSU Jun, Tokyo 105-8587 (JP); OTA Takafumi, Tokyo 105-8587 (JP)
(74) Representative: WSL Patentanwälte Partnerschaft mbB
(86) International application number: PCT/JP2019/019505
(87) International publication number: WO 2019/221231

(56) References cited:
- WO-A1-2015/045974
- WO-A1-2015/111707
- JP-A- 2000 310 336
- JP-U- H0 388 062
- US-A- 5 174 584
- US-A- 5 702 110
- US-A1- 2007 296 156

## Description

### {TECHNICAL FIELD}

The present invention relates to a seal ring used for sealing a clearance between a rotary shaft and a housing, and specifically relates to a seal ring used in a state in which the seal ring is attached to an annular groove, i.e., a so-called stuffing box.

### {BACKGROUND ART}

Typically, a seal ring is attached to the outer periphery of a rotary shaft. A sliding surface of the seal ring slides in close contact with a sliding surface formed at the rotary shaft, and accordingly, the seal ring seals a clearance between the rotary shaft and a housing to prevent leakage of sealed fluid (liquid).

For maintaining sealing properties in the seal ring for a long period of time, conflicting conditions of "sealing" and "lubrication" need to be satisfied. Particularly in recent years, while prevention of leakage of the sealed fluid has been made for, e.g., environmental measures, a demand for friction reduction has increased for reducing a mechanical loss. Friction reduction can be accomplished by the technique of generating a dynamic pressure between the sliding surfaces by rotation of the rotary shaft to slide the sliding surfaces with a fluid film of the sealed fluid being interposed.

For example, a seal ring as described in Patent Citation 1 has been known as the seal ring configured to generate the dynamic pressure between the sliding surfaces by rotation of the rotary shaft. The seal ring of Patent Citation 1 is attached to an annular groove provided at the outer periphery of a rotary shaft. The seal ring is pressed to a housing side and one side wall surface side of the annular groove by the pressure of high-pressure sealed fluid, and a sliding surface at one side surface of the seal ring slides in close contact with a sliding surface at one side wall surface of the annular groove. Moreover, at the sliding surface at one side surface of the seal ring, multiple dynamic pressure grooves opening on an inner diameter side are provided in a circumferential direction. The dynamic pressure groove includes a deep groove at the center in the circumferential direction and shallow grooves formed continuously to both sides of the deep groove in the circumferential direction, extending in the circumferential direction, and having bottom surfaces inclined such that the shallow grooves gradually become shallower toward terminal ends. When the rotary shaft and the seal ring rotate relative to each other, the sealed fluid is introduced from the inner diameter side of the sliding surface into the deep grooves. Moreover, a negative pressure is generated in each shallow groove of the seal ring on a side opposite to a rotation direction of the rotary shaft. Meanwhile, the sealed fluid introduced into the deep grooves is supplied to each shallow groove on the same side as the rotation direction, and therefore, a positive pressure is generated in such a shallow groove. Then, the positive pressure increases due to wedge action caused by the inclined bottom surface of the rotation-direction-side shallow groove, and is generated across the entirety of the dynamic pressure groove. Accordingly, the force of slightly separating the sliding surfaces from each other, i.e., so-called buoyancy, is obtained. The sliding surfaces are slightly separated from each other, and therefore, the high-pressure sealed fluid flows into a portion between the sliding surfaces from the inner diameter side of the sliding surface and the sealed fluid flows out of the rotation-direction-side shallow grooves generating the positive pressure to the portion between the sliding surfaces. Thus, a fluid film is formed between the sliding surfaces, and lubricity between the sliding surfaces is maintained.

### {CITATION LIST}

### {Patent Literature}

Patent Citation 1: JP 9-210211 A (third page, FIG. 3)
Patent Citation 2 : US 2007/296156 A1 discloses a seal ring according to the preamble of claim 1.
Patent Citation 3 : US 5 174 584 A

### {SUMMARY OF INVENTION}

### {Technical Problem}

In the seal ring of Patent Citation 1, the sliding surface of the rotary shaft moves relative to the dynamic pressure grooves in the circumferential direction. The positive pressure increases as the number of rotations of the rotary shaft increases, and the fluid film is formed between the sliding surfaces to enhance the lubricity of the sliding surface. However, the dynamic pressure groove is configured such that both shallow grooves are positioned on the same circumference with respect to the deep groove. Thus, particularly upon high-speed rotation, cavitation is caused in a region where a great positive pressure and a great negative pressure are generated in the circumferential direction. Due to greater variation in the buoyancy generated across the circumferential direction of the sliding surface, there is a probability that an adverse effect on the fluid film, such as a non-uniform fluid film, is caused and the lubricity becomes unstable.

The present invention has been made in view of such a problem, and an object of the present invention is to provide a seal ring configured so that stable lubrication performance can be provided across a wide range of rotation speed.

### {Solution to Problem}

For solving the above-described problem, a seal ring according to the present invention is a seal ring for sealing a clearance between a rotary shaft and a housing, wherein said seal ring has the features of claim 1. Said seal ring includes dynamic pressure grooves formed at a sliding surface of the seal ring and arranged in a circumferential direction so as to be configured to generate dynamic pressure, the dynamic pressure grooves including deep grooves having openings on a sealed fluid side and shallow grooves being shallower than the deep grooves, the shallower grooves being formed continuously to the deep grooves and extending to at least one side in the circumferential direction, wherein at least adjacent two of the deep grooves of the dynamic pressure grooves in the circumferential direction are formed as a dynamic pressure groove unit configured such that the adjacent two of the deep grooves communicate with each other through a communication groove extending in the circumferential direction on an opposite side of the openings of the deep grooves in a radial direction. According to the aforesaid feature of the present invention, high-pressure sealed fluid is introduced to the deep groove of the dynamic pressure groove on one side in the circumferential direction through the opening, and the sealed fluid introduced to the deep groove of the dynamic pressure groove on the other side in the circumferential direction is supplied to the deep groove of the dynamic pressure groove on one side in the circumferential direction from the opposite side of the opening in the radial direction through the communication groove. Thus, in the deep groove of the dynamic pressure groove on one side in the circumferential direction, the sealed fluid is more easily held than in the deep groove of the dynamic pressure groove on the other side in the circumferential direction. The sealed fluid is sufficiently supplied from the deep groove of the dynamic pressure groove on one side in the circumferential direction to the shallow groove of the same dynamic pressure groove. Thus, in the shallow groove of the dynamic pressure groove on one side in the circumferential direction, a relatively-high dynamic pressure can be generated. Moreover, in the shallow groove, on an outer diameter side of which the communication groove is arranged, of the dynamic pressure groove on the other side in the circumferential direction, a relatively-low dynamic pressure can be generated. A fluid film can be formed with favorable balance in the circumferential direction, and stable lubrication performance can be provided across a wide range of rotation speed. Further, in the region of the dynamic pressure groove unit defined by the multiple dynamic pressure grooves and the communication groove at the sliding surface, the thickness of the fluid film is relatively equal across the circumferential direction, and therefore, the fluid film is easily formed with favorable balance in the circumferential direction.

It may be preferable that the shallow grooves are provided continuously to both sides of deep grooves in the circumferential direction. According to such a preferable configuration of the present invention, the seal ring can be rotated in both directions upon use.

It may be preferable that the dynamic pressure groove unit consists of two of the dynamic pressure grooves and the communication groove. According to such a preferable configuration of the present invention, two of the dynamic pressure grooves and the single communication groove form the dynamic pressure groove unit, and therefore, balance in supply of the sealed fluid between the dynamic pressure grooves communicated with each other through the communication groove is easily adjusted. Thus, the fluid film can be formed with favorable balance in the circumferential direction.

It may be preferable that all of the dynamic pressure grooves are formed as dynamic pressure groove units at the sliding surface. According to such a preferable configuration of the present invention, each of all of the dynamic pressure grooves provided at the sliding surface forms each of the dynamic pressure groove units, and therefore, the fluid film can be formed with more favorable balance in the circumferential direction.

### {BRIEF DESCRIPTION OF DRAWINGS}

FIG. 1 is a perspective view illustrating a seal ring according to an embodiment of the present invention by partially-simplified illustration.
FIG. 2 is a sectional view illustrating a sealing structure for a clearance between a rotary shaft and a housing by the seal ring in the embodiment.
FIG. 3 is a partial side view of the seal ring in the embodiment.
FIG. 4 is an A-A sectional view of the seal ring of FIG. 3.
FIG. 5 is a sectional view illustrating a variation of a deep groove of a dynamic pressure groove in the embodiment.
FIG. 6 is a partial side view illustrating a variation of the dynamic pressure groove unit in the embodiment.

### {DESCRIPTION OF EMBODIMENTS}

Hereinafter, a mode for carrying out a seal ring according to the present invention will be described based on an embodiment.

### {Embodiment}

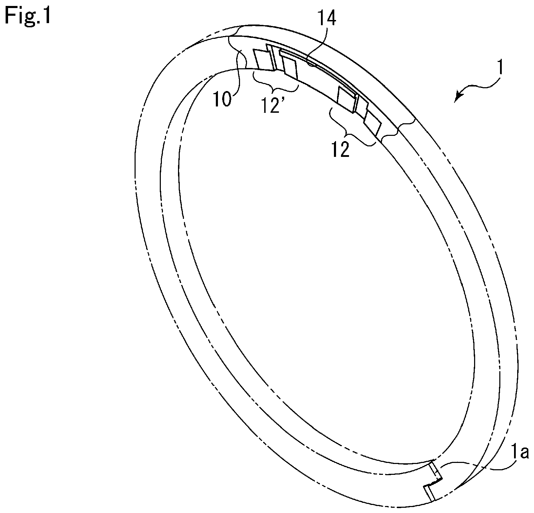

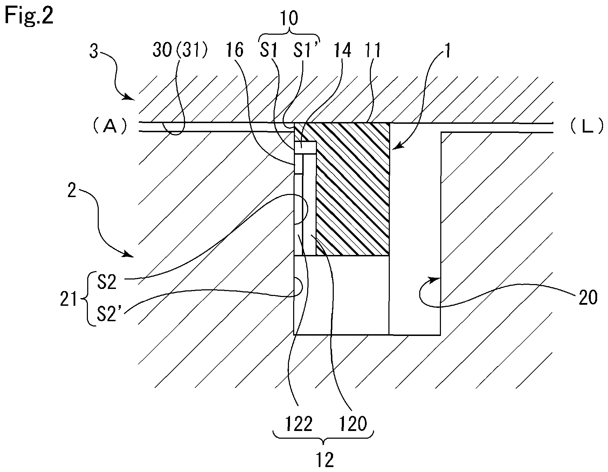

A seal ring according to an embodiment of the present invention will be described with reference to FIGS. 1 to 4. Hereinafter, the right side in the plane of paper of FIG. 2 will be described as a sealed fluid side L, and the left side in the plane of paper will be described as an atmosphere side A. Note that the fluid pressure of sealed fluid on the sealed fluid side L will be described as a higher pressure than an atmospheric pressure. Moreover, a sliding surface includes a flat surface and a groove recessed as compared to the flat surface. For the sake of convenience in description, the flat surface forming the sliding surface is, in the drawings, indicated by the color of white, and the groove forming the sliding surface is indicated by dots.

The seal ring 1 according to the present embodiment seals a portion between a rotary shaft 2 and a housing 3 of a rotary machine, the rotary shaft 2 and the housing 3 rotating relative to each other. In this manner, the seal ring 1 partitions the inside of the housing 3 into the sealed fluid side L and the atmosphere side A (see FIG. 2), and prevents leakage of the sealed fluid from the sealed fluid side L to the atmosphere side A. Note that the rotary shaft 2 and the housing 3 are made of a metal material such as stainless steel. Moreover, the sealed fluid is one used for the purpose of cooling and lubricating, e.g., a not-shown gear and a not-shown bearing provided in a machine chamber of the rotary machine, such as oil.

As illustrated in FIGS. 1 and 2, the seal ring 1 is a component molded with resin such as PTFE, and is provided with a joint portion 1a at one spot in a circumferential direction to form a C-shape. The seal ring 1 is used with the seal ring 1 being attached to an annular groove 20, the annular groove 20 being provided along the outer periphery of the rotary shaft 2 and having a rectangular sectional shape. Moreover, the seal ring 1 has a rectangular sectional shape. The seal ring 1 is pressed to the atmosphere side A by the fluid pressure of the sealed fluid acting on a side surface on the sealed fluid side L, and accordingly, a sliding surface S1 formed on a side surface 10 (hereinafter sometimes merely referred to as a "side surface 10") side on the atmosphere side A slidably closely contacts a sliding surface S2 on a side wall surface 21 (hereinafter sometimes merely referred to as a "side wall surface 21") side of the annular groove 20 on the atmosphere side A. Further, in response to stress in an expansion direction due to the fluid pressure of the sealed fluid acting on an inner circumferential surface, the seal ring 1 is pressed in an outer diameter direction, and accordingly, an outer circumferential surface 11 closely contacts an inner circumferential surface 31 of a shaft hole 30 of the housing 3.

Note that the sliding surfaces S1, S2 form a substantial sliding region between the side surface 10 of the seal ring 1 and the side wall surface 21 of the annular groove 20 of the rotary shaft 2. Moreover, a non-sliding surface S1' is formed continuously to an outer diameter side of the sliding surface S1 on the side surface 10 side, and a non-sliding surface S2' is formed continuously to an inner diameter side of the sliding surface S2 on the side wall surface 21 side (see FIG. 2) .

As illustrated in FIGS. 1 to 4, the sliding surface S1 formed on the side surface 10 side of the seal ring 1 mainly includes a flat surface 16 and multiple dynamic pressure grooves 12 provided in the circumferential direction. Note that the dynamic pressure grooves 12 are arranged at equal intervals in the circumferential direction of the sliding surface S1, except for the vicinity of the joint portion 1a.

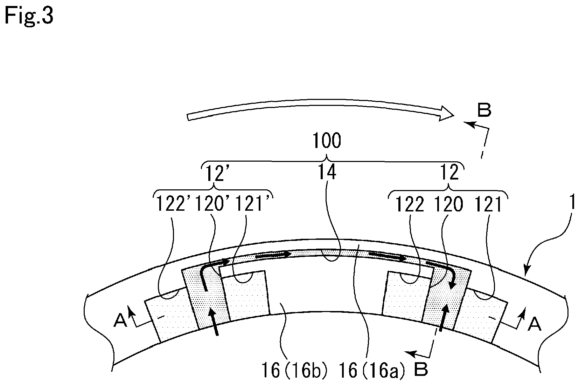

The flat surface 16 includes a seal portion 16a positioned on the outer diameter side and formed continuously in a substantially annular shape across the joint portion 1a, and a lubrication portion 16b positioned on the inner diameter side, sandwiched by adjacent ones of the dynamic pressure grooves 12 in the circumferential direction, and formed continuously to the seal portion 16a (see FIG. 3).

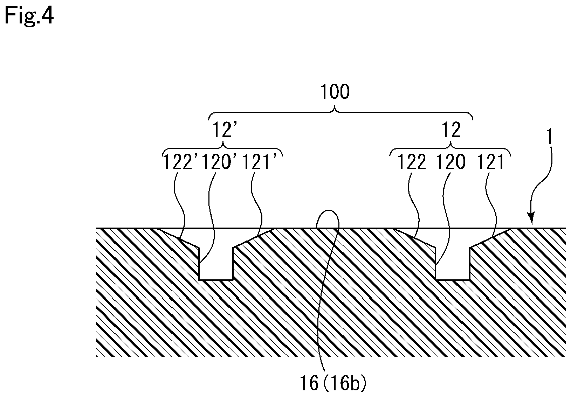

As illustrated in FIGS. 3 and 4, the dynamic pressure groove 12 has the function of generating a dynamic pressure according to rotation of a rotary shaft 2. The dynamic pressure groove 12 includes a deep groove 120 opening on the inner diameter side (i.e., the sealed fluid side) of the seal ring 1 and provided at the center in the circumferential direction and a pair of shallow grooves 121, 122 formed continuously from both sides of the deep groove 120 in the circumferential direction and extending in the circumferential direction. Note that in FIGS. 3 and 4, the right side with respect to the deep groove 120 in the plane of paper will be described as the shallow groove 121, and the left side in the plane of paper will be described as the shallow groove 122.

Specifically, as illustrated in FIG. 4, the deep groove 120 has a bottom surface formed flat, and the shallow grooves 121, 122 have bottom surfaces as inclined surfaces formed such that the shallow grooves 121, 122 gradually become shallower from a deep groove 120 side to terminal ends in the circumferential direction. Moreover, the bottom surface of the deep groove 120 is formed deeper than deepest portions of the shallow grooves 121, 122, and the depth of the deep groove 120 is several tens to several hundreds of µm and preferably 100 to 200 µm. Further, the deep groove 120 is formed longer in a radial direction than the shallow grooves 121, 122.

Moreover, as specifically illustrated in FIG. 3, two dynamic pressure grooves 12, 12' adjacent to each other in the circumferential direction are, at the sliding surface S1, formed as a dynamic pressure groove unit 100 communicated through a single arc-shaped communication groove 14 extending in the circumferential direction on the outer diameter side as a side opposite to openings of deep grooves 120, 120' in the radial direction. Further, the communication groove 14 is formed on the outer diameter side of the flat surface 16 and the inner diameter side of the seal portion 16a formed continuously in the substantially annular shape across the joint portion 1a (see FIG. 1). Note that at the sliding surface S1, all dynamic pressure grooves 12 are formed as the dynamic pressure groove units 100.

In addition, as illustrated in FIG. 2, the deep groove 120 of the dynamic pressure groove 12 and the communication groove 14 are formed with the substantially same depth. Note that the seal ring 1 of FIG. 2 shows a B-B section of FIG. 3.

Next, fluid film formation between the sliding surfaces S1, S2 upon rotation of the rotary shaft 2 will be described. Note that a case where the rotary shaft 2 rotates clockwise as indicated by a white arrow in FIG. 3, i.e., a case where the seal ring 1 rotates counterclockwise relative to the annular groove 20 of the rotary shaft 2 in FIG. 3, will be described herein by way of example. Further, solid arrows in FIG. 3 indicate the flow of the sealed fluid between the dynamic pressure grooves 12, 12' forming the dynamic pressure groove unit 100. Upon relative rotation of the rotary shaft 2 and the housing 3, the sliding surface S1 on the side surface 10 side slides on the sliding surface S2 on the side wall surface 21 side. At this point, the sealed fluid is introduced from the inner diameter side to the deep grooves 120, 120' of the dynamic pressure grooves 12, 12' provided at the sliding surface S1. Moreover, in the communication groove 14 extending in the circumferential direction on the outer diameter side (i.e., the opposite side of the openings in the radial direction) of the deep grooves 120, 120', the sealed fluid is supplied in the circumferential direction (i.e., a rotation direction) to follow rotation of the rotary shaft 2. Further, a negative pressure is generated in the shallow grooves 122, 122' (hereinafter merely referred to as "shallow grooves 122, 122'") of the seal ring 1 on a side (i.e., the left side in the plane of paper of FIG. 3) opposite to the rotation direction of the rotary shaft 2. Meanwhile, the sealed fluid introduced into the deep grooves 120, 120' is supplied to the shallow grooves 121, 121' (hereinafter merely referred to as "shallow grooves 121, 121'") of the seal ring 1 on the same side (the right side in the plane of paper of FIG. 3) as the rotation direction, and a positive pressure is generated in these shallow grooves 121, 121' due to wedge action caused by the inclined surfaces. Then, the positive pressure is generated across the entirety of the dynamic pressure grooves 12, 12', and accordingly, the force of slightly separating the sliding surfaces S1, S2 from each other, i.e., so-called buoyancy, is obtained. The sliding surfaces S1, S2 are slightly separated from each other, and therefore, the high-pressure sealed fluid flows into a portion between the sliding surfaces S1, S2 from the inner diameter side and the sealed fluid flows out of the shallow grooves 121, 121' generating the positive pressure to the portion between the sliding surfaces S1, S2. Further, two dynamic pressure grooves 12, 12' adjacent to each other in the circumferential direction form the dynamic pressure groove unit 100, and therefore, the sealed fluid introduced to the deep groove 120' of the dynamic pressure groove 12' (hereinafter sometimes merely referred to as a "dynamic pressure groove 12'") on the side (i.e., the other side in the circumferential direction, or the left side in the plane of paper of FIG. 3) opposite to the rotation direction of the rotary shaft 2 from the outer diameter side through the communication groove 14 is supplied to the deep groove 120 of the dynamic pressure groove 12 (hereinafter sometimes merely referred to as a "dynamic pressure groove 12") on the same side (i.e., one side in the circumferential direction, the right side in the plane of paper of FIG. 3) as the rotation direction of the rotary shaft 2.

According to such a configuration, in the dynamic pressure groove unit 100, the sealed fluid is more easily held in the deep groove 120 of the dynamic pressure groove 12 than in the deep groove 120' of the dynamic pressure groove 12', and is sufficiently supplied from the deep groove 120 to the shallow groove 121 as a positive pressure generator in the dynamic pressure groove 12. Thus, a relatively-high dynamic pressure can be generated in the shallow groove 121 of the dynamic pressure groove 12, and a relatively-low dynamic pressure can be generated in the shallow groove 121' of the dynamic pressure groove 12' on the outer diameter side of which the communication groove 14 is arranged. A fluid film can be formed with favorable balance in the circumferential direction, and stable lubrication performance can be provided across a wide range of rotation speed.

Further, the communication groove 14 is provided on the outer diameter side of the dynamic pressure grooves 12, 12', and in the region of the dynamic pressure groove unit 100 defined by the dynamic pressure grooves 12, 12' and the communication groove 14 at the sliding surface S1, the sealed fluid is supplied from the communication groove 14 to the flat surface 16 (e.g., the lubrication portion 16b) between the dynamic pressure grooves 12, 12' by a resting pressure. Thus, in the region of the dynamic pressure groove unit 100, the thickness of the fluid film is relatively equal across the circumferential direction, and therefore, the fluid film is easily formed with favorable balance in the circumferential direction.

Moreover, the shallow grooves 122, 122' of the dynamic pressure grooves 12, 12' open on the inner diameter side (i.e., the sealed fluid side), and the sealed fluid is introduced from the inner diameter side of the sliding surface S1. Thus, the sealed fluid is easily held on the shallow groove 122.

Further, in the dynamic pressure groove unit 100, the sealed fluid is supplied from the deep groove 120' of the dynamic pressure groove 12' to the deep groove 120 of the dynamic pressure groove 12 through the communication groove 14, and is sufficiently held in the deep groove 120 of the dynamic pressure groove 12. Thus, the negative pressure generated in the shallow groove 122 of the dynamic pressure groove 12 is reduced, and therefore, a pressure difference between the shallow groove 122 of the dynamic pressure groove 12 and the shallow groove 121' of the dynamic pressure groove 12 adjacent to each other in the circumferential direction can be decreased. Thus, in the portion between the sliding surfaces S1, S2, the dynamic pressure can be generated with pressure (i.e., the positive pressure and the negative pressure) variation in the circumferential direction being reduced in the region of the dynamic pressure groove unit 100. While vibration due to, e.g., cavitation can be prevented, lubricity of the seal ring 1 can be enhanced.

Moreover, the dynamic pressure groove unit 100 configured such that two dynamic pressure grooves 12, 12' adjacent to each other in the circumferential direction are communicated with each other through the single communication groove 14 is formed, and therefore, balance in supply of the sealed fluid between the dynamic pressure grooves 12, 12' communicated with each other through the communication groove 14 is easily adjusted. Thus, the fluid film can be formed with favorable balance in the circumferential direction. Further, all of the dynamic pressure grooves 12 are formed as the dynamic pressure groove units 100 at the sliding surface S1, and therefore, the fluid film can be formed with more favorable balance in the circumferential direction.

Moreover, the dynamic pressure groove 12 includes the deep groove 120 opening on the inner diameter side and provided at the center in the circumferential direction, and the shallow grooves 121, 122 formed continuously to both sides of the deep groove 120 in the circumferential direction, extending in the circumferential direction, and having the bottom surfaces inclined such that the shallow grooves 121, 122 gradually become shallower toward the terminal ends in the circumferential direction. Thus, the seal ring 1 can be rotated in both directions upon use, and even upon high-speed rotation, the sealed fluid can be reliably supplied to any of the shallow grooves 121, 122 through the deep groove 120.

Further, the communication groove 14 is provided so that the sealed fluid can flow out to a wide area between the sliding surfaces S1, S2 on the outer diameter side and the lubricity of the seal ring 1 can be enhanced.

Moreover, the seal ring 1 is in the C-shape, and therefore, seal performance can be stably maintained even when the circumferential length of the seal ring 1 changes due to thermal expansion/contraction.

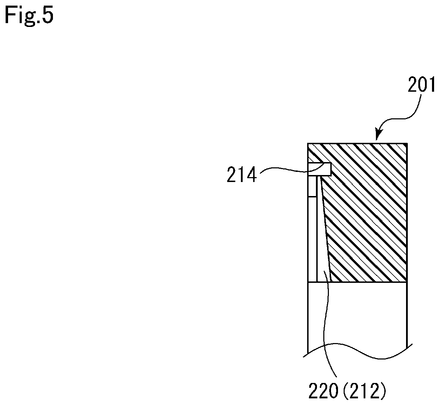

Note that as in a variation of the seal ring 1 illustrated in FIG. 5, a deep groove 220 of a dynamic pressure groove 212 of a seal ring 201 may be formed with a greater depth on the inner diameter side than a depth on the outer diameter side, and a communication groove 214 may be formed with the substantially same depth as the inner-diameter-side depth of the deep groove 220. According to such a configuration, the sealed fluid easily flows from the inner diameter side to the outer diameter side of the deep groove 220, and therefore, is easily introduced into the communication groove 214. Thus, lubricity of the seal ring 201 can be more enhanced.

The embodiments of the present invention have been described above with reference to the drawings, but specific configurations are not limited to these embodiments. The present invention also includes even changes and additions made without departing from the scope of the appended claims.

For example, the communication groove may be formed to extend in the circumferential direction from multiple spots in the radial direction (e.g., a double threaded shape). Moreover, the communication groove is not limited to the arc shape, and may be formed straight or formed in a wave shape, for example.

Moreover, all of the dynamic pressure grooves 12 formed at the sliding surface S1 do not necessarily form the dynamic pressure groove units 100. In this case, the dynamic pressure groove units 100 and the independent dynamic pressure grooves 12 are preferably arranged at equal intervals in the circumferential direction. Further, the multiple dynamic pressure groove units 100 formed at the sliding surface S1 are preferably arranged at equal intervals in the circumferential direction. According to such a configuration, the dynamic pressure can be equally generated in the circumferential direction. In addition, as long as the multiple dynamic pressure groove units are arranged at equal intervals in the circumferential direction at the sliding surface S1, the dynamic pressure grooves 12 themselves are not necessarily arranged at equal intervals in the circumferential direction.

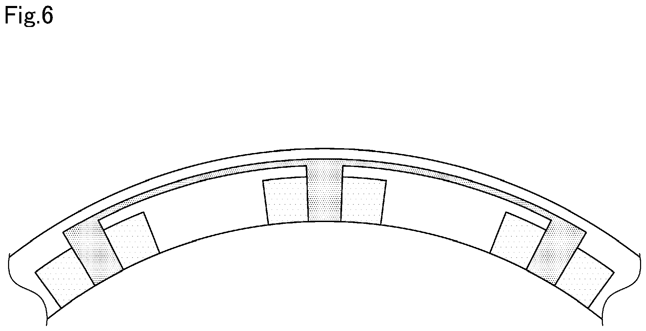

Further, the dynamic pressure groove unit is not limited to one including two dynamic pressure grooves, and three or more dynamic pressure grooves may be communicated with each other through a single communication groove to form a dynamic pressure groove unit. Note that FIG. 6 illustrates a variation of the dynamic pressure groove unit including three dynamic pressure grooves.

Moreover, the number and shape of dynamic pressure grooves provided at the sliding surface S1 of the seal ring may be changed as necessary such that a desired dynamic pressure effect is obtained. As long as the shallow groove formed continuously to the deep groove and extending to at least one side in the circumferential direction is formed, e.g., a T-shaped groove or a Rayleigh step may be employed. Note that the location and shape of the deep groove of the dynamic pressure groove to which the sealed fluid is introduced may be changed as necessary according to the assumed degree of abrasion of the sliding surface.

Further, the seal ring may be formed in an annular shape without the joint portion 1a, and the outer shape thereof is not limited to a circular shape as viewed from the side. The seal ring may be formed in a polygonal shape.

Moreover, the seal ring is not limited to the rectangular sectional shape, and for example, may have a trapezoidal sectional shape or a polygonal sectional shape. The seal ring may be configured such that the side surface forming the sliding surface S1 is inclined.

Further, the grooves described in the above-described embodiments may be formed at the sliding surface S2 of the annular groove 20 of the rotary shaft 2.

Moreover, the oil has been described as the example of the sealed fluid, but the sealed fluid may be liquid such as water or coolant or gas such as air or nitrogen.

### {REFERENCE SIGNS LIST}

- 1: Seal ring
- 2: Rotary shaft
- 3: Housing
- 10: Side surface
- 12, 12': Dynamic pressure groove
- 14: Communication groove
- 16: Flat surface
- 16a: Seal portion
- 16b: Lubrication portion
- 20: Annular groove
- 21: Side wall surface
- 100: Dynamic pressure groove unit
- 120, 120': Deep groove
- 121, 121': Shallow groove (positive pressure generator)
- 122, 122': Shallow groove (negative pressure generator)
- S1, S2: Sliding surface
- S1', S2': Non-sliding surface

## Claims

1. A seal ring (1) for sealing a clearance between a rotary shaft (2) and a housing (3), wherein the seal ring (1) comprises:
a side surface on the sealed fluid side (L),
a side surface (10) on the atmosphere side (A), and
a sliding surface (S1) being part of the side surface (10) on the atmosphere side (A),
dynamic pressure grooves (12, 12') formed at the sliding surface (S1) of the seal ring (1) and arranged in a circumferential direction so as to be configured to generate dynamic pressure, **characterized in that**
the dynamic pressure grooves (12, 12') include deep grooves (120, 120') having openings on an inner diameter side of the seal ring (1) on the sealed fluid side and shallow grooves (121, 121', 122, 122') being shallower than the deep grooves (120, 120'), each of the shallow grooves (121, 121', 122, 122') being formed continuously to the deep grooves (120, 120') and extending to at least one side in the circumferential direction,
wherein at least the two adjacent deep grooves (120, 120') of the dynamic pressure grooves (12, 12') in the circumferential direction are formed as a dynamic pressure groove unit (100) configured such that the two adjacent deep grooves (120, 120') communicate with each other through a communication groove (14) extending in the circumferential direction on an opposite side of the openings of the deep grooves (120, 120') in a radial direction.

2. The seal ring (1) according to claim 1, wherein
the shallow grooves (121, 121', 122, 122') are provided continuously to both sides of the deep grooves (120, 120') in the circumferential direction.

3. The seal ring (1) according to claim 1 or 2, wherein
the dynamic pressure groove unit (100) consists of two of the dynamic pressure grooves (12, 12') and the communication groove (14).

4. The seal ring (1) according to any one of claims 1 to 3, wherein
all of the dynamic pressure grooves (12, 12') are formed as dynamic pressure groove units (100) at the sliding surface.

## Patentansprüche

1. Dichtungsring (1) zur Abdichtung eines Spaltes zwischen einer rotierenden Welle (2) und einem Gehäuse (3), wobei der Dichtungsring (1) Folgendes aufweist:
eine Seitenfläche auf der abgedichteten Fluidseite (L),
eine Seitenfläche (10) auf der Atmosphärenseite (A), und
eine Gleitfläche (S1), die Teil der Seitenfläche (10) auf der Atmosphärenseite (A) ist,
Nuten (12, 12') für dynamischen Druck, die an der Gleitfläche (S1) des Dichtungsrings (1) ausgebildet sind und in einer Umfangsrichtung so angeordnet sind, dass sie so eingerichtet sind, dass sie dynamischen Druck erzeugen, **dadurch gekennzeichnet, dass** die Nuten (12, 12') für den dynamischen Druck tiefe Nuten (120, 120') aufweisen, die Öffnungen auf einer Innendurchmesserseite des Dichtungsrings (1) auf der abgedichteten Fluidseite aufweisen, und flache Nuten (121, 121', 122, 122'), die flacher sind als die tiefen Nuten (120, 120'), wobei jede der flachen Nuten (121, 121', 122, 122') kontinuierlich zu den tiefen Nuten (120, 120') ausgebildet ist und sich zu wenigstens einer Seite in der Umfangsrichtung erstreckt,
wobei wenigstens die beiden in Umfangsrichtung benachbarten tiefen Nuten (120, 120') der Nuten (12, 12') für dynamischen Druck als eine Nuteneinheit (100) für dynamischen Druck ausgebildet sind, die so eingerichtet ist, dass die beiden benachbarten tiefen Nuten (120, 120') über eine Verbindungsnut (14) miteinander kommunizieren, die sich in Umfangsrichtung auf einer gegenüberliegenden Seite der Öffnungen der tiefen Nuten (120, 120') in radialer Richtung erstreckt.

2. Dichtungsring (1) nach Anspruch 1, wobei
die flachen Nuten (121, 121', 122, 122') zu beiden Seiten der tiefen Nuten (120, 120') in Umfangsrichtung kontinuierlich vorgesehen sind.

3. Der Dichtungsring (1) nach Anspruch 1 oder 2, wobei
die Nuteneinheit (100) für dynamischen Druck aus zwei der Nuten (12, 12') für dynamischen Druck und der Verbindungsnut (14) besteht.

4. Dichtungsring (1) nach einem der Ansprüche 1 bis 3, wobei
alle Nuten (12, 12') für dynamischen Druck als Nuteneinheiten (100) für dynamischen Druck an der Gleitfläche ausgebildet sind.

## Revendications

1. Bague d'étanchéité (1) pour sceller un jeu entre un arbre rotatif (2) et un boîtier (3), la bague d'étanchéité (1) comprenant :
une surface latérale du côté fluide à rendre étanche (L),
une surface latérale (10) du côté atmosphère (A), et une surface de coulissement (S1) faisant partie de la surface latérale (10) du côté atmosphère (A),
des rainures de pression dynamique (12, 12') formées à la surface de coulissement (S1) de la bague d'étanchéité (1) et agencées dans une direction circonférentielle de manière à être configurées pour générer une pression dynamique, **caractérisée en ce que**
les rainures de pression dynamique (12, 12') incluent des rainures profondes (120, 120') ayant des ouvertures sur un côté de diamètre intérieur de la bague d'étanchéité (1) du côté de fluide à rendre étanche et des rainures peu profondes (121, 121', 122, 122') étant moins profondes que les rainures profondes (120, 120'), chacune des rainures peu profondes (121, 121', 122, 122') étant formée en continu par rapport aux rainures profondes (120, 120') et s'étendant vers au moins un côté dans la direction circonférentielle,
au moins les deux rainures profondes adjacentes (120, 120') des rainures de pression dynamique (12, 12') dans la direction circonférentielle étant formées sous la forme d'une unité de rainure de pression dynamique (100) configurée de telle sorte que les deux rainures profondes adjacentes (120, 120') communiquent l'une avec l'autre par l'intermédiaire d'une rainure de communication (14) s'étendant dans la direction circonférentielle sur un côté opposé des ouvertures des rainures profondes (120, 120') dans une direction radiale.

2. Bague d'étanchéité (1) selon la revendication 1,
les rainures peu profondes (121, 121', 122, 122') étant prévues en continu par rapport aux deux côtés des rainures profondes (120, 120') dans la direction circonférentielle.

3. Bague d'étanchéité (1) selon la revendication 1 ou 2,
l'unité de rainure de pression dynamique (100) se composant de deux des rainures de pression dynamique (12, 12') et de la rainure de communication (14).

4. Bague d'étanchéité (1) selon l'une quelconque des revendications 1 à 3,
toutes les rainures de pression dynamique (12, 12') étant formées sous la forme d'unités de rainures de pression dynamique (100) à la surface de coulissement.
